# EUROPÄISCHE PATENTSCHRIFT

(11) **EP 2 125 315 B1**
(45) Veröffentlichungstag und Bekanntmachung des Hinweises auf die Patenterteilung: **15.05.2013**
(21) Anmeldenummer: 08716262.4
(22) Anmeldetag: 05.03.2008
(51) Int. Cl.: B29B 9/16, B29B 13/02, C08J 3/12

(54) **VERFAHREN ZUR GRANULIERUNG UND KRISTALLISATION VON THERMOPLASTISCHEN POLYMEREN**
METHOD FOR GRANULATING AND CRYSTALLIZING THERMOPLASTIC POLYMERS
PROCÉDÉ DE GRANULATION ET DE CRISTALLISATION DE POLYMÈRES THERMOPLASTIQUES

(30) Priorität: 15.03.2007 DE 102007012450
(43) Veröffentlichungstag der Anmeldung: 02.12.2009
(73) Patentinhaber: Automatik Plastics Machinery GmbH, 63762 Grossostheim (DE)
(72) Erfinder: DOLL, Andreas, 63743 Aschaffenburg (DE); GLÖCKNER, Frank, 63739 Aschaffenburg (DE)
(74) Vertreter: Bardehle, Heinz
(86) Internationale Anmeldenummer: PCT/EP2008/001745
(87) Internationale Veröffentlichungsnummer: WO 2008/110290

(56) Entgegenhaltungen:
- EP-A- 1 522 395
- DE-A1- 10 144 747
- DE-T2- 60 023 831

## Beschreibung

Die vorliegende Erfindung betrifft ein Verfahren zur Granulierung und Kristallisation von thermoplastischen Polymeren.

Im Allgemeinen neigen Granulate von teilkristallinen Thermoplasten bei Erwärmung über ihre Glasübergangstemperatur (T_{G}) zum Verkleben. Für eine Weiterverarbeitung solcher Polymergranulate ist es jedoch unumgänglich, die Granulatkörner über die Glasübergangstemperatur (T_{G}) hinaus zu erwärmen. Die Granulatkörner werden daher z.B. durch Kristallisation, wobei zumindest ihre Oberflächen kristallisiert werden, so behandelt, dass sie ohne zu verkleben weiter verwendet bzw. weiter verarbeitet werden können. Solche Polymergranulate können beispielsweise in der Kunststoffflaschenherstellung Verwendung finden.

Generell sind die bekannten Kristallisationsverfahren relativ aufwendig, da in mehreren aufeinanderfolgenden Stufen eine Konditionierung/Kristallisation stattfindet, wobei insbesondere Wärmebehandlungsschritte eingesetzt werden, welche einen besonders hohen Energiebedarf erfordern, um die Polymergranulate weiterverarbeitbar zu machen. Ferner sind die Prozessparameter dabei häufig sehr schwer im großindustriellen Maßstab beherrschbar, da beispielsweise schon geringe Temperaturschwankungen zu Verklumpungen von Granulatkörnern und somit zu einem Stillstand der verwendeten Prozesse führen können. Ferner sind bei den bekannten Verfahren häufig mehrere unterschiedliche, aufeinander speziell abzustimmende Steuerungen und spezielle Apparaturen benötigende Konditionierungsschritte zur Behandlung von Polymergranulaten bekannt, welche jedoch bei höheren Produktionsmengen nur schwierig beherrschbar sind. Granulatkörner aus thermoplastischen Polymeren werden heutzutage beispielsweise mittels Stranggranulation oder mittels Unterwassergranulation hergestellt.

Die Schrift WO 03/031133 A1 beschreibt ein Verfahren zur Kristallisation von Polymermaterial, wobei das Polymermaterial vor dem Kristallisationsschritt einem oder mehreren Konditionierungsschritten unterzogen wird, in welchen in dem Polymermaterial ein bestimmter Wassergehalt und/oder ein bestimmtes Wassergehaltsprofil eingestellt wird, wodurch die Weiterbehandelbarkeit des entsprechenden Materials verbessert werden soll. Als Medien, in welchen entsprechende Materialien behandelt werden, ist dort beispielsweise Wasserdampf vorgesehen.

Die deutsche Offenlegungsschrift DE 198 48 245 A1 beschreibt ein Verfahren zur Granulierung und Kristallisation von thermoplastischen Polyestern oder Copolyestern, wobei durch Eintritt eines entsprechenden Vorprodukts in eine Flüssigkeit der Kristallisationsvorgangs des Polyesters beschleunigt wird, wobei das dortige Verfahren bei der Stranggranulierung eingesetzt wird, wobei eine Granulierung der Stränge vor und/oder nach Behandlung mit der Flüssigkeit erfolgt, indem zunächst das Vorprodukt in Form von Strängen aus einer Düse austritt, in ein erstes Flüssigkeitsbad eintaucht, zu Pellets granuliert wird und die Pellets dann in ein zweites Flüssigkeitsbad eintauchen, wobei die Pellets in den Flüssigkeitsbädern kristallisieren.

Generell ist bei diesem Verfahren das Vorsehen verschiedener Flüssigkeitsbäder und/oder Kühlmedien verhältnismäßig aufwendig und in der Feinabstimmung der Verfahrensparameter aufeinander tendenziell mit der Möglichkeit behaftet, fehleranfällig zu sein.

In der deutschen Offenlegungsschrift DE 101 44 747 A1 ist eine Vorrichtung zum kontinuierlichen Behandeln von Granulat beschrieben, bei der Fluidisierungskammem die entscheidende Rolle spielen, Dabei handelt es sich um Gaskammern, die für den gesamten Fluidisierungsprozess von Granulat ohne jegliche Verwendung einer Flüssigkeit auf das Granulat einwirken.

In der europäischen Patentanmeldung EP 1 522 395 A2 ist ein Prozess zur Kristallisierung von aus einem Polymer bestehenden Granulats beschrieben, wobei ein flüssiges Medium Verwendung findet. Das flüssige Medium wird dabei über den gesamten Prozessverlauf auf einer Temperatur oberhalb von 130 Grad Celsius gehalten, ohne dass während des Prozesses der Kristallisierung irgendwelche besonderen Schritte der Änderung von Temperatur oder Druck vorgesehen sind.

Es ist daher die Aufgabe der vorliegenden Erfindung, ein Verfahren zur Granulierung und Kristallisation von thermoplastischen Polymeren vorzusehen, welches die Nachteile des Standes der Technik überwindet und insbesondere ein Verfahren vorzusehen, welches auf relativ einfach zu steuernde Art und Weise ohne gesteigerten apparativen Aufwand auch im großindustriellen Maßstab mit größeren Materialdurchsätzen eine schnelle und zuverlässige Erzeugung von gut weiterverarbeitbaren Granulatkörnern bietet.

Die Aufgabe wird erfindungsgemäß gelöst mit einem Verfahren mit den Merkmalen gemäß Anspruch 1. Ausführungsformen des erfindungsgemäßen Verfahrens sind in den Unteransprüchen definiert.

Das erfindungsgemäße Verfahren zur Granulierung und Kristallisation von thermoplastischen Polymeren kann grundsätzlich für alle kristallisationsfähigen Polymere eingesetzt werden, insbesondere für thermoplastische Polyester oder Copolyester, bevorzugt beispielsweise Polyamid, POM, Polyolefine oder PET, bevorzugter PET mit einer intrinsischen Viskosität IV von 0,5 bis 1,2 g/dl. Ferner kann das erfindungsgemäße Verfahren auch für Polyamid (PA), Polylactid (PLA), thermoplastische Elastomere (TPE) und Hotmelt eingesetzt werden.

Das erfindungsgemäße Verfahren zur Granulierung und Kristallisation von thermoplastischen Polymeren ist durch die folgenden Schritte gekennzeichnet:
- Granulierung einer Polyesterschmelze zur Erzeugung von Granulatkörnern,
- Zuführung der Granulatkörner zu einer Flüssigkeit mit einem Druck d1 und einer Temperatur T1,
- Erhöhung des Drucks der Flüssigkeit mit den darin enthaltenen Granulatkörnern auf einen Druck d2>d1 und
- Erhöhung der Temperatur der Flüssigkeit mit den darin enthaltenen Granulatkörnern auf eine Temperatur T2>T1,
- Nukleierung der Granulatkörner in der Flüssigkeit mit dem Druck d2 und der Temperatur T2,
- Erhöhung der Temperatur der Flüssigkeit mit den darin enthaltenen Granulatkörnern auf eine Temperatur T3>T2,
- Kristallisation der Granulatkörner in der Flüssigkeit mit der Temperatur T3,
- Abbau des Drucks und der Temperatur der Flüssigkeit mit den darin enthaltenen Granulatkörnern auf einen Druck d4 und eine Temperatur T4, und
- Abscheiden der Granulatkörnern von der Flüssigkeit.

Bei dem erfindungsgemäßen Verfahren kann der Druckerhöhungsschritt auf einen Druck d2>d1 und der Temperaturerhöhungsschritt auf eine Temperatur T2>T1 gleichzeitig erfolgen.

Als Flüssigkeit kann bei dem erfindungsgemäßen Verfahren jede geeignete Flüssigkeit Verwendung finden, bevorzugt Wasser. Es sind noch Zusatzstoffe in der Flüssigkeit enthalten, welche als Nukleationskeime die Nukleierung der Granulatkörnern in der Flüssigkeit starten bzw. beschleunigen und/oder verbessern.

Generell kann das erfindungsgemäße Verfahren mehrere Druck- und Temperaturstufen aufweisen, bevorzugt zwei jeweilige Stufen. Auch drei oder mehr solche Stufen sind erfindungsgemäß möglich. Die Anzahl der verwendeten Stufen kann beispielsweise von den Polymereigenschaften abhängig sein. Allgemein ist das erfindungsgemäße Verfahren kaskadenartig angelegt, d.h. in einer Abfolge mehrerer Druck- bzw. Temperaturstufen.

Die vorliegende Erfindung bietet gegenüber dem Stand der Technik u.a. den Vorteil, dass durch kombinierte Druck- und/oder Temperatursteuerung einer Flüssigkeit die in der Flüssigkeit sich befindenden Granulatkörnern auf einfache und kontrollierte Art und Weise nukleiert und nachfolgend kristallisiert werden können. Ein solches erfindungsgemäßes Verfahren ist dadurch verhältnismäßig einfach steuer- bzw. regelbar und auch für größere Materialdurchsätze geeignet, da ein kontinuierlicher Verfahrensablauf problemlos möglich ist. Es ist beispielsweise erfindungsgemäß nicht nötig, die Granulatkörner in unterschiedlichen Konditionierungsschritten in unterschiedlichen Medien vorzubehandeln bzw. zu transportieren; erfindungsgemäß ist nur eine Flüssigkeit erforderlich, in welcher die Granulatkörner während des erfindungsgemäßen Verfahrens verbleiben können, d.h. die Granulatkörnern müssen z.B. nicht in unterschiedliche Bäder/Behandlungsmedien überführt werden. Dies gilt sowohl bei einer Granulierung der Polymerschmelze, z.B. durch Stranggranulierung als auch z.B. durch Unterwassergranulierung.

Vorteilhafterweise kann bei dem erfindungsgemäßen Verfahren die Flüssigkeit mit den darin enthaltenen Granulatkörnern in einem geschlossenen System geführt werden, d.h. beispielsweise von Umwelteinflüssen abgekoppelt. Dadurch kann die Führung der Granulatkörnern durch die Flüssigkeit besonders einfach und effektiv erfolgen. Insbesondere kann das erfindungsgemäß bevorzugte geschlossene System durch eine Abfolge von Rohrleitungen und/oder miteinander verbundenen geschlossenen Reaktionsbehältern bestehen, welche mit der Flüssigkeit gefüllt sind.

Um ein mögliches Verkleben der in der Flüssigkeit enthaltenen Granulatkörner besonders zuverlässig vermeiden zu können, kann bei dem erfindungsgemäßen Verfahren die Flüssigkeit mit den darin enthaltenen Granulatkörnern in Bewegung gehalten werden, bevorzugt während des gesamten Vorgangs, während welchem sich die Granulatkörnern in der Flüssigkeit befinden, in Bewegung gehalten werden.

Bei einem mehrstufigen Verfahrensablauf kann das erfindungsgemäße Verfahren die folgenden weiteren Schritte aufweisen:
- Zusätzliche Erhöhung des Drucks der Flüssigkeit mit den darin enthaltenen Granulatkörnern nach der Nukleierung auf einen Druck d3>d2,
- Kristallisation der Granulatkörner in der Flüssigkeit mit dem Druck d3 und der Temperatur T3.

Bei einer mehrstufigen Verfahrensführung kann der Abbau des Drucks und der Temperatur der Flüssigkeit mit den darin enthaltenen Granulatkörnern nach der Kristallisation zunächst auf einen Druck d5>d4 und eine Temperatur T5>T4 erfolgen. Danach kann dann der Abbau des Drucks und der Temperatur der Flüssigkeit mit den darin enthaltenen Granulatkörnern auf den Druck d4 und die Temperatur T4 erfolgen.

Die Temperatur T4 kann die Umgebungstemperatur sein.

Die Temperatur T1 kann bevorzugt in einem Bereich von 20° C bis 100° C liegen.

Die Temperatur T2 kann in einem Bereich von 80° C bis 180° C liegen, bevorzugt in einem Bereich von 110° C bis 130° C.

Die Temperatur T3 kann in einem Bereich von 110° C bis 200° C liegen, bevorzugt in einem Bereich von 120° C bis 160° C.

Der Druck d4 kann gleich dem Druck d1 sein.

Der Druck d1 kann der Umgebungsdruck sein.

Der Druck d2 kann in einem Bereich von 1bar bis 10bar liegen, bevorzugt in einem Bereich von 1bar bis 3bar.

Der Druck d3 kann in einem Bereich von 1bar bis 10bar liegen, bevorzugt in einem Bereich von 2bar bis 6bar.

Bei dem erfindungsgemäßen Verfahren kann der Nukleierungsschritt der Granulatkörner in der Flüssigkeit eine Nukleierungszeitdauer von bis zu 10 Minuten aufweisen, bevorzugt eine Nukleierungszeitdauer im Bereich von 1 Minute bis 10 Minuten, und bevorzugter eine Nukleierungszeitdauer im Bereich von 2 Minuten bis 4 Minuten. Die Nukleierungszeitdauer kann je nach Polymermaterial, Druck und Temperatur gewählt werden.

Bei dem Kristallisationsschritt der Granulatkörner in Flüssigkeit kann eine Kristallisationszeitdauer von bis zu 30 Minuten vorgesehen sein, bevorzugt eine Kristallisationszeitdauer im Bereich von 1 Minute bis 10 Minuten, und bevorzugter eine Kristallisationszeitdauer im Bereich von 2 Minuten bis 4 Minuten. Die Kristallisationszeitdauer kann je nach verwendetem Polymermaterial gewählt werden.

Die Erfindung wird im Folgenden anhand der Figuren näher erläutert werden. Es zeigen:
- Figur 1: eine schematische Ansicht einer ersten Vorrichtung, welche zur Ausführung des erfindungsgemäßen Verfahrens Verwendung finden kann, wobei zur Granulierung eine Stranggranulationsvorrichtung Verwendung findet;
- Figur 2: eine schematische Ansicht einer zweiten Vorrichtung, welche zur Ausführung des erfindungsgemäßen Verfahrens Verwendung finden kann, wobei zur Granulierung eine Unterwassergranulationsvorrichtung Verwendung findet; und
- Figuren 3a und 3b: zwei zusammengehörige Diagramme, welche schematisch den Temperatur- bzw. Druckverlauf gemäß einer bevorzugten Ausfiihrungsform des erfindungsgemäßen Verfahrens wiedergeben.

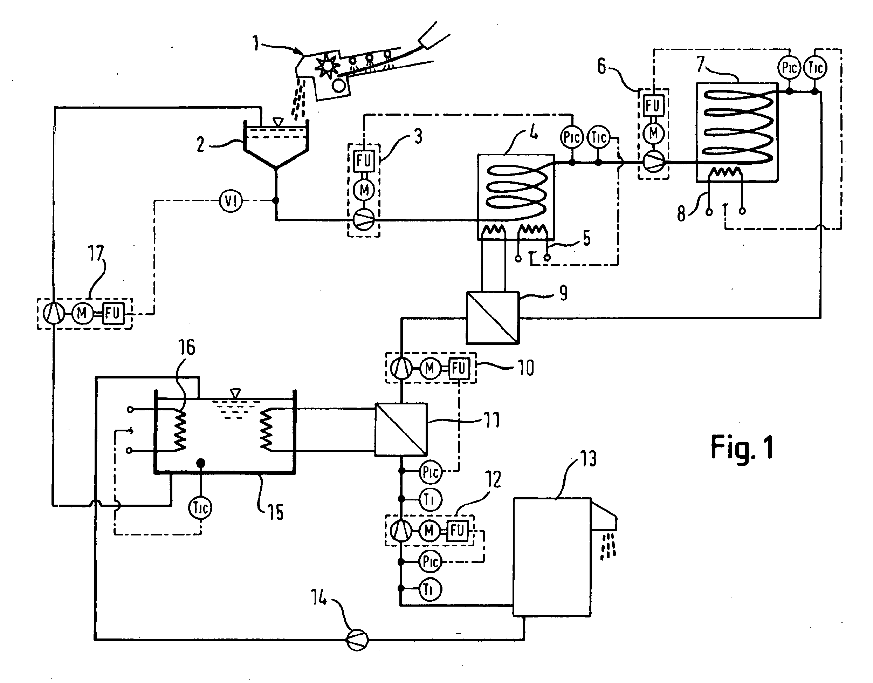

Figur 1 zeigt eine schematische Ansicht einer Vorrichtung bzw. einer Anlage, welche zur Durchführung des erfindungsgemäßen Verfahrens Verwendung finden kann, wobei eine Stranggranulationsvorrichtung eingesetzt wird. Das erfindungsgemäße Verfahren wird anhand dieser Figur erläutert werden.

In Figur 1 wird eine Schmelze von thermoplastischen Polymeren strangförmig ausgetragen und mittels Wasser über eine Rutsche einem Granulator 1 zugeführt und zu Granulatkörnern geschnitten. Dabei handelt es sich um ein im Wesentlichen dem Fachmann geläufiges Stranggranulationsverfahren, welches in diesem Zusammenhang daher nicht näher beschrieben zu werden braucht.

Die Granulatkörner werden einer Flüssigkeit über einen Mischbehälter 2 zugefährt, wobei diese Flüssigkeit unter einem Druck d1 und einer Temperatur T1 steht. Der Druck d1 ist dabei bevorzugt der Umgebungsdruck. Als Flüssigkeit findet bevorzugt Wasser Verwendung. Die Flüssigkeit mit den darin enthaltenen Granulatkörnern wird einer Druckerhöhungspumpe 3 zugeführt. Hierbei kann zusätzliche temperierte Flüssigkeit aus einem Vorratsbehälter 15 mittels einer Pumpe 17 zugeführt werden. Durch eine geeignete Rückkopplungs-Steuerung mit einer Volumenstrommessung in dem System der Flüssigkeitsführung kann durch Messung des Volumenstroms nach dem Mischbehälter 2 mit Hilfe der Pumpe 17 ein konstanter Volumenstrom in dem bevorzugt geschlossenen System der Flüssigkeitsführung mit den darin enthaltenen Granulatkörnern eingestellt und beibehalten werden.

Die Temperatur T1 der Flüssigkeit kann in einem Bereich von 20° C bis 100° C bzw. bis Siedetemperatur der Flüssigkeit, z.B. des Wassers, liegen. Das Verhältnis von Flüssigkeit zu darin enthaltenen Granulatkörnern wird bevorzugt so eingestellt, dass maximal 35 % Granulatkörner pro Volumen der Flüssigkeit vorliegen, bevorzugt maximal 15 % Granulatkörnern pro Volumen der Flüssigkeit.

Die Kristallisation der in der Flüssigkeit vorhandenen Granulatkörner erfolgt erst nach einer Nukleierung der Granulatkörnern in der Flüssigkeit. Dabei wird zumindest die Randschicht der Granulatkörner einer Nukleierung unterzogen. Dadurch werden Kristallisationskeime gebildet. Geeignete Nukleierungsmittel können bereits von vornherein in das Material der thermoplastischen Polymere eingebettet sein. Kristallisationskeime können aber auch durch Diffusion von außen eingebracht werden. Vor allem bei PET als Polymermaterial ist Wasser eine geeignete Quelle zur Nukleierung.

Die Nukleierung der Granulatkörner in der Flüssigkeit findet statt nachdem der Druck durch die Druckerhöhungspumpe 3 auf den Druck d2>d1 erhöht worden ist. Der Druck d2 liegt dabei bevorzugt im Bereich von 1bar bis 10bar. Die Temperatur der Flüssigkeit mit den darin enthaltenen Granulatkörnern hinter der Druckerhöhungspumpe 3 entspricht in etwa der Temperatur vor der Druckerhöhungspumpe 3. Die Flüssigkeit mit den darin enthaltenen Granulatkörnern wird von der Druckerhöhungspumpe 3 in eine Rohrleitung gepumpt, die spiralförmig in einem mit Thermoöl, Dampf oder durch Einspeisung von Wasser temperierten Nukleierungs-Behälter 4 eingesetzt ist. Hier wird die Flüssigkeit mit den darin enthaltenen Granulatkörnern auf eine Temperatur T2>T1 aufgeheizt. Dabei ist diese Temperatur T2 die für das spezifische Material der erzeugten Granulatkörner benötigte Nukleierungstemperatur. Das Thermoöl bzw. der Dampf wird durch eine Temperierungseinrichtung 5 und gegebenenfalls durch Durchlaufen eines Wärmetauschers 9, welcher die Abwärme aus einer der nachfolgenden Stufen verwendet, auf die geeignete Temperatur zur Erzielung der Temperatur T2 aufgeheizt bzw. entsprechend temperiert.

Der Querschnitt der eingesetzten Rohrleitung ist generell so bemessen, dass immer eine ausreichende Geschwindigkeit der Flüssigkeit mit den darin enthaltenen Granulatkörnern vorliegt, wobei diese ausreichende Geschwindigkeit oberhalb der Sedimentationsgeschwindigkeit des Granulats liegt.

Die Länge der verwendeten Rohrleitung, insbesondere die Länge der verwendeten Rohrleitung in dem temperierten Nukleierungs-Behälter 4 ergibt sich aus der für das spezifische Material erforderlichen Nukleierungszeitdauer, d.h. der entsprechenden Verweilzeit. Bei der Bestimmung der Verweilzeit ist auch der gewählte Rohrleitungsquerschnitt zu berücksichtigen. Die bevorzugte Nukleierungszeitdauer liegt dabei im Bereich bis zu 10 Minuten und ist abhängig von dem zu kristallisierenden Material.

Am Ende der Nukleierungsstufe ist in der schematisch gezeigten Anlage der Figur 1 eine weitere Druckerhöhungspumpe 6 angeordnet. Der Flüssigkeitsdruck vor der Pumpe ist der Druck d2, welcher mittels einem Druckfühler an dieser Stelle und durch Rückkopplungs-Steuerung mit dem frequenzgesteuerten Antrieb der Druckerhöhungspumpe 3 eingestellt und konstant gehalten wird. Die dort herrschende Temperatur muss nicht unbedingt der Temperatur T2 entsprechen. Die dortige Temperatur kann jedoch in jedem Fall durch geeignete Rückkopplungs-steuerung unter Verwendung des Temperatursignals durch Messung an dieser Stelle mittels der Temperierungsvorrichtung 5 konstant gehalten werden. Die Temperatur T1 liegt bevorzugt in einem Bereich von 20° C bis 100° C, die Temperatur T2 liegt bevorzugt in einem Bereich von 80° C bis 180° C, bevorzugt bei 110° C bis 130° C.

Da die Kristallisation bei üblicherweise verwendeten Materialien meist bei wesentlich höherer Temperatur als die Nukleierung solcher Materialien ihre optimale Reaktionsgeschwindigkeit aufweist, wird bei dem erfindungsgemäßen Verfahren nach der Nukleierung der Granulatkörnern in der Flüssigkeit mit dem Druck d2 und der Temperatur T2 die Temperatur der Flüssigkeit mit den darin enthaltenen Granulatkörner auf eine Temperatur T3>T2 erhöht. Gleichzeitig kann gemäß einer bevorzugten Ausführungsform des erfindungsgemäßen Verfahrens zusätzlich eine Erhöhung des Drucks der Flüssigkeit mit den darin enthaltenen Granulatkörnern nach der Nukleierung auf einen Druck d3>d2 vorgenommen werden. Die Kristallisation der Granulatkörner in der Flüssigkeit erfolgt dann mit einer Temperatur T3 und gegebenenfalls einem Druck d3. Bevorzugt kann die Kristallisationstemperatur T3, je nach verwendetem Material, in Wasser zwischen 110° C und 200° C liegen. Der Wasserdruck p3 kann z.B. in einem Bereich von 1bar bis 10bar, gegebenenfalls auch bis 15bar, liegen. Der Druck p3 wird durch die Druckerhöhungspumpe 6 erzeugt. Dieser Druck p3 kann durch eine Rückkopplungssteuerung eines Signals eines Druckfühlers am Ende der Kristallisationsanordnung und durch frequenzgesteuerten Antrieb der Druckerhöhungspumpe 6 eingestellt und konstant gehalten werden. Die Temperatur hinter der Druckerhöhungspumpe 6 entspricht in etwa der Temperatur vor der Druckerhöhungspumpe 6. Die Flüssigkeit bzw. das Wasser mit den darin enthaltenen Granulatkörnern wird von der Druckerhöhungspumpe 6 in eine Rohrleitung gepumpt, welche spiralförmig in einem mit Thermoöl- oder Dampftemperierten Kristallisationsbehälter 7 eingesetzt ist. Hier wird die Flüssigkeit mit den darin enthaltenen Granulatkörnern auf die Kristallisationstemperatur T3 aufgeheizt. Das Thermoöl bzw. der Dampf wird durch eine geeignete Heizvorrichtung 8 temperiert bzw. aufgeheizt.

Auch hier ist der Querschnitt der Rohrleitung, wie übrigens bevorzugt auch im gesamten System, so bemessen, dass immer eine Fließgeschwindigkeit der Flüssigkeit mit den darin enthaltenen Granulatkömem vorliegt, die oberhalb der Sedimentationsgeschwindigkeit dieser Granulatkörnern liegt.

Auch beim Kristallisationsschritt ergibt sich die Länge der verwendeten Rohrleitung in dem Kristallisationsbehälter aus dem gewählten Querschnitt und der benötigten Verweilzeit bzw. der gewünschten Kristallisationszeitdauer. Diese liegt bevorzugt im Bereich von einer Minute bis 10 Minuten, kann aber auch im Bereich bis 30 Minuten liegen, bevorzugter aber im Bereich von zwei Minuten bis vier Minuten. Generell ist die gewählte Kristallisationszeitdauer entsprechend dem verwendeten Material zu wählen.

Am Ende der Nukleierungsstufe ist ein Wärmetauscher 9 angeordnet, durch welchen der Flüssigkeit mit den darin enthaltenen Granulatkörnern Temperatur entzogen wird. Dabei wird die Flüssigkeit mit den darin enthaltenen Granulatkörnern auf eine Temperatur T5 abgekühlt. Danach wird durch eine geeignete Druckabbauvorrichtung, z.B. eine Druckabbauturbine mit frequenzgesteuertern Antrieb (Bezugszeichen 10) der Druck der Flüssigkeit mit den darin enthaltenen Granulatkörnern von dem Druck d3 auf einen Druck d5 gesenkt. Der Druck d5 liegt dabei bevorzugt knapp oberhalb oder genau bei dem für die verwendete Flüssigkeit bei der vorliegenden Temperatur gegebenen Siededruck. d5 kann mit Hilfe eines Messsignals eines Druckfühlers hinter einem Wärmetauscher 11 und durch Rückkopplungsschaltung mit dem frequenzgesteuerten Antrieb der Druckabbauvorrichtung (z.B. einer Druckabbauturbine) 10 eingestellt und konstant gehalten werden. Vor dem Abscheiden der Granulatkörnern von der Flüssigkeit wird dem Gemisch aus Flüssigkeit und Granulatkörnern in dem Wärmetauscher 11 Wärme entzogen, die z.B. für die Temperierung des Flüssigkeitsvorrats 15 verwendet werden kann. Dabei wird die Temperatur der Flüssigkeit mit den darin enthaltenen Granulatkörnern auf eine Temperatur T4<T5 abgekühlt. Nach dem Wärmetauscher 11 wird der Druck der Flüssigkeit mit den darin enthaltenen Granulatkörnern durch eine geeignete Druckabbauturbine 12 mit frequenzgesteuertern Antrieb auf einen Druck d4<d5 abgesenkt, wobei der Druck d4 bevorzugt gleich dem Ausgangsdruck d1 ist, und besonders bevorzugt gleich dem Umgebungsdruck ist. Durch geeignete Rückkopplungs-Ansteuerung unter Verwendung eines Drucksignals, gewonnen nach der Druckabbauturbine 11, kann sichergestellt werden, dass ein konstantes Druckniveau in dem gesamten Prozess eingestellt werden kann und Prozessdruckschwankungen im System, insbesondere in dem bevorzugt geschlossenen System der Flüssigkeit mit den darin enthaltenen Granulatkörnern, minimiert werden können.

Dann wird die Flüssigkeit mit den darin enthaltenen Granulatkörnern einem Granulatabscheider 13 zugeführt, in welchem die Granulatkörner von der Flüssigkeit abgeschieden werden. Die Granulatkörnern können einer weiteren Verarbeitung zugeführt bzw. zur weiteren Verarbeitung weitergeleitet werden, während die Flüssigkeit durch eine Pumpe 14 dem Vörratsbehälter 15 zugeführt wird. Der Flüssigkeitsvorrat in dem Vorratsbehälter 15 kann dabei durch eine Temperierungseinrichtung 16 und eventuell auch durch Verwendung der Abwärme des Wärmetauschers 11 aus der vorausgegangenen Stufe temperiert werden.

Statt eine Druckerhöhung, wie oben beschrieben, in zwei Stufen durchzuführen (von Druck d1 erst auf Druck d2 und dann auf Druck d3), kann eine Druckerhöhung direkt auf das Niveau des Drucks d3 des Kristallisationsschritts erfolgen. Dadurch kann bei der schematisch gezeigten Anlage der Figur 1 beispielsweise die Druckerhöhungspumpe 6 entfallen.

Ferner kann, statt die Druckabsenkung in zwei Stufen durchzuführen, der Druckabbau von dem Druck d3 nach Druck d4 auch in einer Stufe erfolgen. Dabei sollte jedoch zuvor durch den Wärmetauscher 9 bzw. 11 die Temperatur der Flüssigkeit unter die Siedetemperatur bei Umgebungsdruck gesenkt werden. Somit findet ein Druckaufbau in einer Stufe ohne Verdampfen der verwendeten Flüssigkeit statt.

Wird die Temperatur der Flüssigkeit bei einstufigem Druckabbau nicht unter die Siedetemperatur bei Umgebungsdruck gesenkt, dann wird die Flüssigkeit zumindest teilweise verdampfen. Bei entsprechender Prozessführung kann dann die separate Trennung der Granulatkörner von der Flüssigkeit entfallen. Der entstehende Dampf kann aufgefangen werden und nach einer Kondensation wieder dem Prozess zugeführt werden. Bei dem erfindungsgemäßen Verfahren kann die Prozessführung so erfolgen, dass die Flüssigkeit mit den darin enthaltenen Granulatkörnern in einem geschlossenen System gerührt wird. Die Flüssigkeit mit den darin enthaltenen Granulatkörnern kann bevorzugt immer in Bewegung gehalten werden.

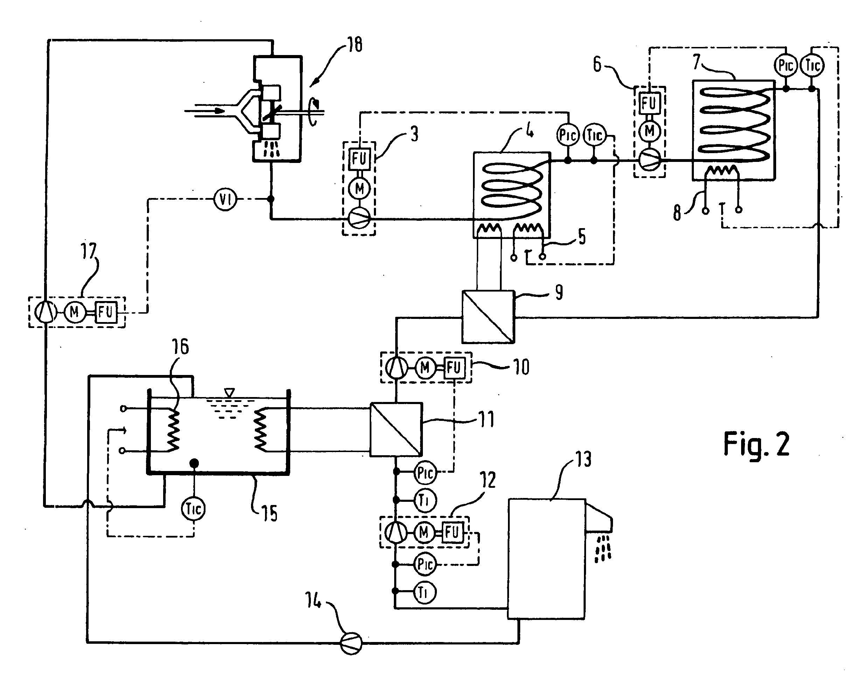

Figur 2 zeigt in einer schematischen Ansicht ein System bzw. eine Vorrichtung zur Durchführung des erfindungsgemäßen Verfahrens, wobei zur Granulierung der Polymerschmelze im Unterschied zur Ausführungsform der Figur 1 in Figur 2 eine Unterwassergranulationsvorrichtung 18 Verwendung findet. Diese Unterwassergranulationsvorrichtung ist dem Fachmann geläufig, so dass auf eine detaillierte Beschreibung hier verzichtet werden kann.

Ansonsten entspricht die Vorrichtung bzw. das System, wie es in Figur 2 dargestellt ist, dem System, wie es in Figur 1 dargestellt ist, wobei die oben im Zusammenhang mit Figur 1 vorgenommenen Erläuterungen auch im Zusammenhang mit Figur 2 gelten.

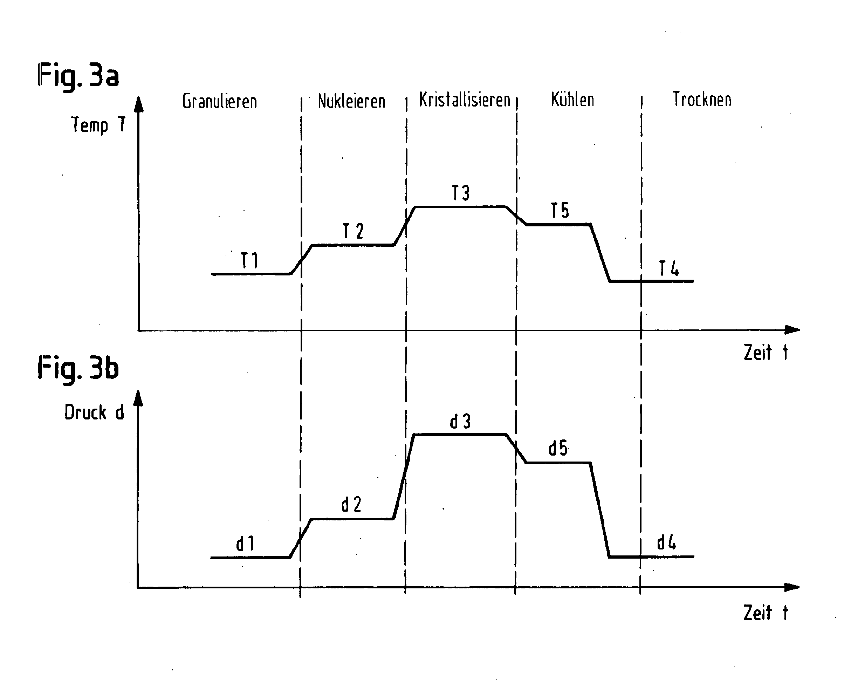

Die Figuren 3a und 3b zeigen zwei zusammengehörige Diagramme, welche schematisch den Temperatur- bzw. Druckverlauf gemäß einer bevorzugten Ausführungsform des erfindungsgemäßen Verfahrens wiedergeben. Die in den Figuren 3a und 3b dargestellten Größen Temperatur, Druck und Zeit sind nicht als absolute Größen wiedergegeben und sollen lediglich die tendenziellen Abläufe wiedergeben.

## Patentansprüche

1. Verfahren zur Granulierung und Kristallisation von thermoplastischen Polymeren,
**gekennzeichnet durch** die Schritte:
- Granulierung einer Polymerschmelze zur Erzeugung von Granulatkörnern,
- Zuführung der Granulatkörner zu einer Zusatzstoff enthaltenden Flüssigkeit mit einem Druck d1 und einer Temperatur T1,
- Erhöhung des Drucks der Flüssigkeit mit den darin enthaltenen Granulatkörnern auf einen Druck d2 > d1.
- Erhöhung der Temperatur der Flüssigkeit mit den darin enthaltenen Granulatkörnern auf eine Temperatur T2 > T1,
- Nukleierung der Granulatkörner in der Flüssigkeit unter Mitwirkung eines in der Flüssigkeit enthaltenen Zusatzstoffes mit dem Druck d2 und der Temperatur T2,
- Erhöhung der Temperatur der Flüssigkeit mit den darin enthaltenen Granulatkörnern auf eine Temperatur T3 > T2,
- Kristallisation der Granulatkörner in der Flüssigkeit mit der Temperatur T3,
- Abbau des Drucks und der Temperatur der Flüssigkeit mit den darin enthaltenen Granulatkörnern auf einen Druck d4 und eine Temperatur T4 und
- Abscheiden der Granulatskörner von der Flüssigkeit.

2. Verfahren gemäß Anspruch 1, wobei die Flüssigkeit mit den darin enthaltenen Granulatkörnern in einem geschlossenen System geführt wird.

3. Verfahren gemäß Anspruch 1 oder 2, wobei die Flüssigkeit mit den darin enthaltenen Granulatkörnern in Bewegung gehalten wird.

4. Verfahren gemäß einem der Ansprüche 1 bis 3, mit den weiteren Schritten:
- zusätzliche Erhöhung des Drucks der Flüssigkeit mit den darin enthaltenen Granulatkörnern nach der Nukleierung auf einen Druck d3>d2,
- Kristallisation der Granulatkörner in der Flüssigkeit mit dem Druck d3 und der Temperatur T3.

5. Verfahren gemäß einem der Ansprüche 1 bis 4, wobei der Abbau des Drucks und der Temperatur der Flüssigkeit mit den darin enthaltenen Granulatkörnern nach der Kristallisation zunächst auf einen Druck d5>d4 und eine Temperatur T5>T4 erfolgt.

6. Verfahren gemäß einem der Ansprüche 1 bis 5, wobei die Temperatur T4 die Umgebungstemperatur ist.

7. Verfahren gemäß einem der Ansprüche 1 bis 6, wobei die Temperatur.
T1 im Bereich 20°C bis 100°C liegt.

8. Verfahren gemäß einem der Ansprüche 1 bis 7, wobei die Temperatur T2 im Bereich 80°C bis 180°C liegt, bevorzugt im Bereich 110°C bis 130°C.

9. Verfahren gemäß einem der Ansprüche 1 bis 8, wobei die Temperatur T3 im Bereich 110°C bis 200°C liegt, bevorzugt im Bereich 120°C bis 160°C.

10. Verfahren gemäß einem der Ansprüche 1 bis 9, wobei der Druck d4=d1 ist.

11. Verfahren gemäß einem der Ansprüche 1 bis 10, wobei der Druck d1 der Umgebungsdruck ist.

12. Verfahren gemäß einem der Ansprüche 1 bis 11, wobei der Druck d2 im Bereich 1bar bis 10bar liegt, bevorzugt im Bereich 1bar bis 3bar.

13. Verfahren gemäß einem der Ansprüche 1 bis 12, wobei der Druck d3 im Bereich 1bar bis 10bar liegt, bevorzugt im Bereich 2bar bis 6bar.

14. Verfahren gemäß einem der Ansprüche 1 bis 13, wobei der Nukleierungsschritt der Granulatkörnern in der Flüssigkeit eine Nukleierungszeitdauer von bis zu 10min aufweist, bevorzugt eine Nukleierungszeitdauer im Bereich von 1min bis 10min, und bevorzugter eine Nukleierungszeitdauer im Bereich von 2min bis 4min.

15. Verfahren gemäß einem der Ansprüche 1 bis 14, wobei der Kristallisationsschritt der Granulatkörner in der Flüssigkeit eine Kristallisationszeitdauer von bis zu 30min aufweist, bevorzugt eine Kristallisationszeitdauer im Bereich von 1min bis 10min, und bevorzugter eine Kristallisationszeitdauer im Bereich von 2min bis 4min.

## Claims

1. A method for granulating and crystallizing thermoplastic polymers, **characterized by** the steps:
- granulating a polyester melt for the purpose of producing granules;
- supplying the granules to a liquid under a pressure d1 and at a temperature T1;
- increasing the pressure of the liquid, including the granules contained thereon, to a pressure d2>d1;
- increasing the temperature of the liquid, including the granules contained therein, to a temperature T2>T1;
- nucleating the granules in the liquid with participation of an additive contained in the liquid under the pressure d2 and at the temperature T2;
- increasing the temperature of the liquid, including the granules contained therein, to a temperature T3>T2;
- crystallizing the granules in the liquid at the temperature T3;
- decreasing the pressure and temperature of the liquid, including the granules contained thereon, to a pressure d4 and a temperature T4; and
- separating the granules from the liquid.

2. The method according to claim 1, wherein the liquid, including the granules contained therein, is supplied to a closed system.

3. The method according to claims 1 or 2, wherein the liquid, including the granules contained therein, is kept in motion.

4. The method according to one of the claims 1 to 3, comprising the further steps:
- additionally increasing the pressure of the liquid, including the granules contained therein, to a pressure d3>d2 following nucleation;
- crystallizing the granules in the liquid under the pressure d3 and at the temperature T3.

5. The method according to one of the claims 1 to 4, wherein the pressure and the temperature of the liquid, including the granules contained therein, are first decreased to a pressure d5>d4 and a temperature T5>T4 following crystallization.

6. The method according to one of the claims 1 to 5, wherein the temperature T4 is the ambient temperature.

7. The method according to one of the claims 1 to 6, wherein the temperature T1 lies in the range between 20°C and 100°C.

8. The method according to one of the claims 1 to 7, wherein the temperature T2 lies in the range between 80° C and 180° C, preferably in the range of 100° C and 130° C.

9. The method according to one of the claims 1 to 8, wherein the temperature T3 lies in the range between 110° C and 200° C, preferably in the range between 120° C and 160° C

10. The method according to one of the claims 1 to 9, wherein the pressure d4 = d1.

11. The method according to one of the claims 1 to 10, wherein the pressure d1 is the atmospheric pressure.

12. The method according to one of the claims 1 to 11, wherein the pressure d2 lies in the range between 1 bar and 10 bar, preferably in the range between 1 bar and 3 bar.

13. The method according to one of the claims 1 to 12, wherein the pressure d3 lies in the range between 1 bar and 10 bar, preferably in the range between 2 bar and 6 bar.

14. The method according to one of the claims 1 to 13, wherein the step of nucleating the granules in the liquid has a nucleation period of up to 10 minutes, preferably a nucleation period in the range between 1 minute and 10 minutes and more preferably a nucleation period in the range between 2 minutes and 4 minutes.

15. The method according to one of the claims 1 to 14, wherein the step of crystallizing the granules in the liquid has a crystallization period of up to 30 minutes, preferably a crystallization period in the range between 1 minute and 10 minutes and more preferably a crystallization period in the range between 2 minutes and 4 minutes.

## Revendications

1. Procédé de granulation et de cristallisation de polymères, **caractérisé par** les étapes :
- Granulation d'une masse de polymère en fusion en vue de l'obtention de granules,
- Acheminement des granules jusqu'à un fluide contenant un additif avec une pression d1 et une température T1,
- Augmentation de la pression du fluide et des granules qu'il contient à une pression d2 > d1,
- Augmentation de la température du fluide et des granules qu'il contient à une température T3 > T2,
- Cristallisation des granules dans le fluide à la température T3,
- Réduction de la pression et de la température du fluide et des granules qu'il contient à une pression d4 et une température T4, puis
- Séparation des granules du fluide.

2. Procédé selon la revendication 1 au cours duquel le fluide et les granules qu'il contient sont acheminés vers un système fermé.

3. Procédé selon les revendications 1 ou 2 au cours duquel le fluide et les granules qu'il contient sont maintenus en mouvement.

4. Procédé selon l'une des revendications 1 à 3 comprenant les étapes suivantes :
- Augmentation supplémentaire de la pression du fluide et des granules qu'il contient, après la nucléation, à une pression de d3>d2,
- Cristallisation du granule contenu dans le fluide à une pression d3 et une température T3.

5. Procédé selon l'une des revendications 1 à 4 au cours duquel la réduction de la pression et de la température du fluide et des granules qu'il contient est effectuée après la cristallisation d'abord à une pression de d5>d4 et une température T5>T4.

6. Procédé selon l'une des revendications 1 à 5 au cours duquel la température T4 est égale à la température environnante.

7. Procédé selon l'une des revendications 1 à 6 au cours duquel la température T1 se situe entre 20 °C et 100 °C.

8. Procédé selon l'une des revendications 1 à 7 au cours duquel la température T2 se situe entre 80 °C et 180 °C, préférablement entre 110 °C et 130 °C.

9. Procédé selon l'une des revendications 1 à 8 au cours duquel la température T3 se situe entre 110 °C et 200 °C, préférablement entre 120 °C et 160 °C.

10. Procédé selon l'une des revendications 1 à 9 au cours duquel la pression est à d4=d1.

11. Procédé selon l'une des revendications 1 à 10 au cours duquel la pression d1 est égale à la pression environnante.

12. Procédé selon l'une des revendications 1 à 11 au cours duquel la pression d2 se situe entre 1 à 10 bars, préférablement entre 1 et 3 bars.

13. Procédé selon l'une des revendications 1 à 12 au cours duquel la pression d3 se situe entre 1 et 10 bars, préférablement entre 2 et 6 bars.

14. Procédé selon l'une des revendications 1 à 13 au cours duquel l'étape de nucléation du granule contenu dans le fluide présente une durée de nucléation maximale de 10 min., préférablement une durée de nucléation entre 1 et 10 min., et dans le meilleur des cas une durée de nucléation entre 2 et 4 min.

15. Procédé selon l'une des revendications 1 à 14 au cours duquel l'étape de cristallisation du granule contenu dans le fluide présente une durée de cristallisation maximale de 30 min., préférablement une durée de cristallisation entre 1 et 10 min., et dans le meilleur des cas une durée de cristallisation entre 2 et 4 min.
